# EUROPEAN PATENT APPLICATION

(11) **EP 2 104 105 A1**
(43) Date of publication of application: **23.09.2009**
(21) Application number: 08251026.4
(22) Date of filing: 20.03.2008
(51) Int. Cl.: G11B 27/034

(54) **Digital audio and video clip encoding**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

An encoded clip generator comprises an input interface 402 for receiving source raw audio/video data from a media source 30. The source data comprises a series of complete video frames and a corresponding series of audio frames. The generator also includes an editor interface for receiving a clip start position and a clip end position. The generator includes a processor 410 and a memory 420 containing instructions for controlling the operation of the processor 410. Included in the memory 420 is a selection module 422 for generating a raw audio/video clip comprising video frames and audio frames selected from the source data according to the received clip start and end positions to provide an unextended raw audio/video clip; an extension module 424 for extending the unextended raw video clip by adding additional video frames and additional audio frames; an encoding module 426 for encoding the extended raw video clip to form an encoded extended video clip; and a trimming module 428 for removing excess video and audio frames from the encoded extended video clip such that all of the desired video frames are included and such that the duration of the encoded audio stream is at least as long as the duration of the encoded video stream remaining.

## Description

### Field of the Invention

The present invention relates to digital audio and video clip encoding and in particular to a method of, and apparatus for, encoding audio and video clips such that they can be quickly combined together to form a single continuous composition or audio/video article.

### Background to the Invention

Systems are known in which different audio/video scenes or clips are combined together in different combinations so as to produce different compilations. For example, US patent No. 6,584,273 describes a method of generating a compilation from a plurality of underlying Audio/Video (AN) clips in which there are a large number of short "bridge sequences" each of which matches the end of one scene to the beginning of another so that those two scenes can be seamlessly merged together from the perspective of the viewer. In order to implement the actual merging together of the separate clips (including the bridge clips themselves), however, this is done by providing the clips to a media viewer on a client device as separate media files and requiring the media viewer to play the separate media files sequentially. The extent to which this can be done in a seamless manner depends therefore upon the particular media player being run on the client device - however, since media players normally buffer a portion of the media file to be played before commencing playback, there are frequently small pauses between the playback of the separate clips in practise.

### Summary of the Invention

According to a first aspect of the present invention, there is provided a method of generating a digitally encoded audio video clip comprising the steps of: providing a set of raw audio video data comprising a series of complete video frames and a corresponding series of audio segments and receiving a signal indicative of a clip start time and a clip end time; selecting the video frames and audio frames according to the received clip start and end times to provide an unextended raw video clip; extending the unextended raw video clip by adding additional video frames and additional audio frames; encoding the extended raw video clip to form an encoded extended video clip; and removing excess video and audio frames from the encoded extended video clip such that all of the desired video frames are included and such that the duration of the encoded audio stream remaining does not differ from the duration of the encoded video stream remaining by more than a pre-specified amount.

For the sake of clarity, the above method is described as being composed of four separate steps; however, it will be apparent to the reader that in practice some of these steps may be combined together to form composite steps achieving the outcome or outcomes of two or more individual steps. For example, in a currently preferred embodiment, the steps of extracting the desired audio and video frames from source data to form an unextended raw video clip and of extending this, by adding additional frames, are combined; in this case there is at no stage an actual unextended raw audio/video clip actually formed, as the process in fact goes directly from the source data to the extended raw video clip - nonetheless this can notionally be divided into the two claimed steps of forming an unextended clip and then extending it since this is the effect of the composite step. One way in which this could be achieved, for example, would be by moving the clip end position by a few frames to make the raw video clip somewhat extended, and then to move straight to the encoding and trimming steps.

The term "raw" audio/video data is used to refer to data which is (substantially) uncompressed and is intended to include, in particular, data stored in the Full Frame Uncompressed AVI format (i.e. full frame uncompressed data contained within the Audio Video Interleave (AVI) container). This usually stores the video data as a set of bitmaps using a suitable 3 dimensional colour space (e.g. Red Green and Blue (RGB) or the "YUV" colour space scheme, etc.); the audio is usually stored as PCM Wave Audio or WAV chunks, typically, and conveniently, each chunk of audio corresponds at least in order of magnitude terms to the display period of the video frames. The term "encoded" is used to refer to the same data after a compression technique has been used to recode the data in such a way that it requires fewer data bits to represent the data and includes various lossy compression techniques such as those employed in the Mpeg video standards or the H.26x video coding standards including the Advanced Audio Coding (AAC) technique for compressing audio data. The compressed data is usually then contained within a "container" such as the Mpeg 4 container and/or a further container aiming to assist in making the compressed audio/video data streamable over the Internet such as, for example, the Flash Video (FLV) audio/video container file format.

The term audio frame is used to refer to a particular chunk of audio data; in raw audio data the chunk size might just be a function of how the data is stored within a container (e.g. within the AVI container audio data is typically stored in chunks of about 26 and two thirds ms (milli-seconds)). In encoded (compressed) format the chunks are generally referred to as audio frames and the size is chosen in order to provide efficient coding - a typical duration of encoded audio frames is again 26 and 2/3 ms per audio frame.

Reference to the duration of an audio or video stream (whether encoded or compressed, etc. or not) means the duration of the audio or video stream as it is supposed to be presented to an end user when the clip is played by a suitable media player (after suitable decoding and/or decompressing, etc. as necessary) provided it is operating correctly. Similarly, reference to the duration of an audio or video frame represents the duration of the audio stream or video stream encoded by that frame - in the case of a frame this will be the inverse of the frames per second rate of the data.

Preferably, the method further comprises assembling an audio/video article from a plurality of digitally encoded audio/video clips generated according to the first aspect of the present invention, wherein the assembling is performed by concatenating the encoded video frames of each subsequent clip onto the encoded video frames of each preceding clip and concatenating the encoded audio frames of each subsequent clip onto the encoded audio frames of each preceding clip according to a desired order in which the clips are to be assembled, wherein each time a subsequent audio/video clip is concatenated to a preceding audio/video clip to form a composition (including a partial or intermediate composition) comprising two or more digitally encoded video clips, the duration of the audio stream is compared with the duration of the video stream and if it is determined that the audio stream exceeds the video stream duration by more than a specified amount, then such audio frame or frames are deleted so as to ensure that the audio stream does not exceed the video stream duration by more than the specified amount.

According to a second aspect of the present invention, there is provided a method of assembling an audio/video article from a plurality of digitally encoded audio/video clips, each of which comprises a plurality of video and audio frames, the method comprising sequentially concatenating the encoded video frames of each subsequent clip onto the encoded video frames of each preceding clip and the encoded audio frames of each subsequent clip onto the encoded audio frames of each preceding clip, **characterised in that** the duration of the audio stream of a clip or a composition before and/or after each sequential concatenation is compared with the duration of the corresponding respective video stream and if it is determined that the audio stream differs from the video stream duration by more than a specified amount, then an audio and/or video frame or frames are deleted or added so as to ensure that the audio stream does not exceed the video stream duration by more than the specified amount before performing any further concatenation.

Preferably, for each digitally encoded audio/video clip to be assembled, the duration of the encoded audio stream is prearranged to be at least as long as the duration of the encoded video stream. Preferably this is achieved using the method of the first aspect of the present invention.

Preferably, the encoded audio/video clips to be assembled into a media article are selected from a store containing a plurality of pre-encoded audio/video clips. Preferably the store of pre-encoded audio/video clips includes at least some clips of similar content but encoded at different levels of compression or media quality (e.g. image size in pixels, etc.) or using different "formats" (especially using different container formats - e.g. FLV, MJPEG, AVI, etc.) so that the similar content can be provided to different users having different bandwidth capacities, media players, etc. without the need to perform any transcoding before sending out the assembled media article.

The use of the first and second aspects of the present invention in combination provide a method of efficiently generating a very large number of different video compositions by combining a set of clips in many different combinations. In this way, it is not necessary to pre-prepare and store separately each different composition - instead they can be generated on the fly from a playlist which merely specifies the clips to be used and the order in which they should appear. Furthermore, this can be done without having to decode and then re-encode the video clips; this is advantageous because typical video encoders for use in creating video media which is well adapted for transmitting over the Internet (and especially for "streaming" media where the media is encoded in such a way that the receiving media viewer can start playing the media before it has finished receiving (so called "downloading") the entirety of the media content which is being downloaded) tend to be "lossy" which means that each time a piece of media (e.g. audio and/or video) is encoded the quality of the media is reduced somewhat - because of this it is better to avoid performing multiple encoding/decoding/re-encoding cycles etc. which is achievable using the first and second aspects of the present invention in combination. Furthermore, by storing the clips already in an encoded fashion, there is no need to encode the composition each time a new composition is requested and this saves time and processing effort (media encoding is a fairly processor intensive operation and so it is preferable if this can be done only once as a pre-publishing stage and not at run-time every time a new composition is requested). Finally, by encoding the clips (for subsequent concatenation) separately, it ensures that each clip starts with a key frame, which makes it possible to perform a fairly simple video concatenation in order to join the clips - by contrast, if a clip were extracted directly from pre-encoded footage, either one would need to decode and then re-encode any frames prior to a key frame, or one would be forced to start the clip at the closest keyframe, rather than at any desired frame.

Preferably, each preceding clip has its audio and video stream durations compared and amended if necessary prior to performing the concatenation of each subsequent clip onto it, except where it is known that the clips have been pre-processed, for example by the first aspect of the present invention, such that it is known implicitly that each individual clip prior to any concatenation having been performed will not have an audio stream duration which differs from the video stream duration by more than the specified amount, in which case at least prior to the first concatenation no checking will be required of the first clip in the assembly.

According to a third aspect of the present invention, there is provided an encoded clip generator comprising an input interface for receiving source raw audio video data comprising a series of complete video frames and a corresponding series of audio segments and for receiving a clip start position and a clip end position; a selection module for generating a raw audio video clip comprising video frames and audio frames selected from the source data according to the received clip start and end positions to provide an unextended raw video clip; an extension module for extending the unextended raw video clip by adding additional video frames and additional audio frames; an encoding module for encoding the extended raw video clip to form an encoded extended video clip; and a trimming module for removing excess video and audio frames from the encoded extended video clip such that all of the desired video frames are included and such that the duration of the encoded audio stream does not differ from the duration of the encoded video stream remaining by more than a specified amount.

According to a fourth aspect of the present invention, there is provided an encoded audio/video clip assembler for assembling an audio/video composition or article from a plurality of digitally encoded audio/video clips, wherein each clip comprises a plurality of digitally encoded and compressed video and audio frames and wherein the duration of the encoded audio stream is at least as long as the duration of the encoded video stream, the assembler comprising a concatenator for concatenating the encoded video frames of each subsequent clip onto the frames of the preceding clip and concatenating the encoded audio frames of each subsequent clip onto the audio frames of the preceding clip, **characterised in that** the concatenator is operable, each time an audio/video clip is concatenated to form a composition comprising two or more digitally encoded video clips (either before or after the concatenation is performed, possibly excluding either the first or last such concatenation), to compare the duration of the audio stream with the duration of the video stream and if it determines that the audio stream differs from the video stream duration by more than a pre-specified amount, then the concatenator is further operable to delete any excess audio or video frame or frames or add an additional one or more audio or video frames so that the audio stream does not differ from the video stream by more than the pre-specified amount.

Further aspects of the present invention provide a computer program or suite of programs for carrying out the methods of the first and/or second aspect of the present invention or causing a computer to operate as a clip generator of clip assembler according to the third or fourth aspect of the present invention. Further aspects of the present invention relate to a carrier medium, preferably a tangible carrier medium such as a magnetic or optical storage disk or a nonvolatile solid state storage device (e.g. a usb flash-drive) or volatile storage means such as a dynamic memory chip etc.

### Brief Description of the Figures

In order that the present invention may be better understood, embodiments thereof will now be described with reference to the accompanying drawings in which:
Figure 1 is a schematic block diagram of an encoded clip generation system including an encoded clip generator according to an embodiment of the present invention together with a media source store, user interface equipment and a clip store;
Figure 2 is a schematic block diagram of an encoded audio/video clip assembly system comprising an encoded audio/video clip assembler according to an embodiment of the present invention together with an encoded audio/video clip store;
Figure 3 is a flowchart of a method of generating an encoded audio/video clip according to an embodiment of the present invention;
Figures 4a to 4e schematically illustrate an audio/video clip as it is processed according to the method illustrated in Figure 3 starting as a raw audio video clip in Figure 4a and finishing as an encoded audio/video clip (ready for use in the assembly method illustrated in Figure 5) in Figure 4e;
Figure 5 is a flowchart of a method of assembling a plurality of encoded audio/video clips into an encoded audio/video article or composition; and
Figures 6a - 6c schematically illustrate the assembly of three audio/video clips according to the method illustrated in Figure 5.

### Detailed Description

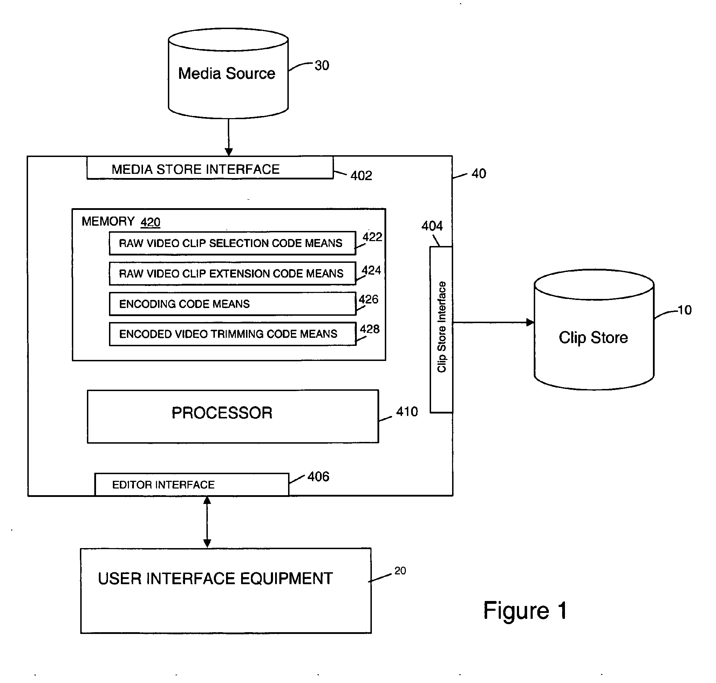

Figure 1 illustrates an encoded clip generation system including an encoded clip generator 40 connected to a Media source data store 30, user interface equipment 20 and an encoded audio/video clip store 10. In the present embodiment, the generator 40 and interface 20 comprise a conventional personal computer (pc) programmed to provide the functionality described below, with the user interface equipment 20 being a conventional keyboard, mouse and video display monitor.

The generator 40 comprises a processor unit 410, a media store interface 402 for obtaining raw media for processing from the media source data store 30, a clip store interface 404 for sending completed encoded audio/video clips to the clip store 10 and an editor interface 406 for interfacing with the user interface equipment (i.e. for controlling the monitor display and for receiving inputs from a user via the keyboard and mouse).

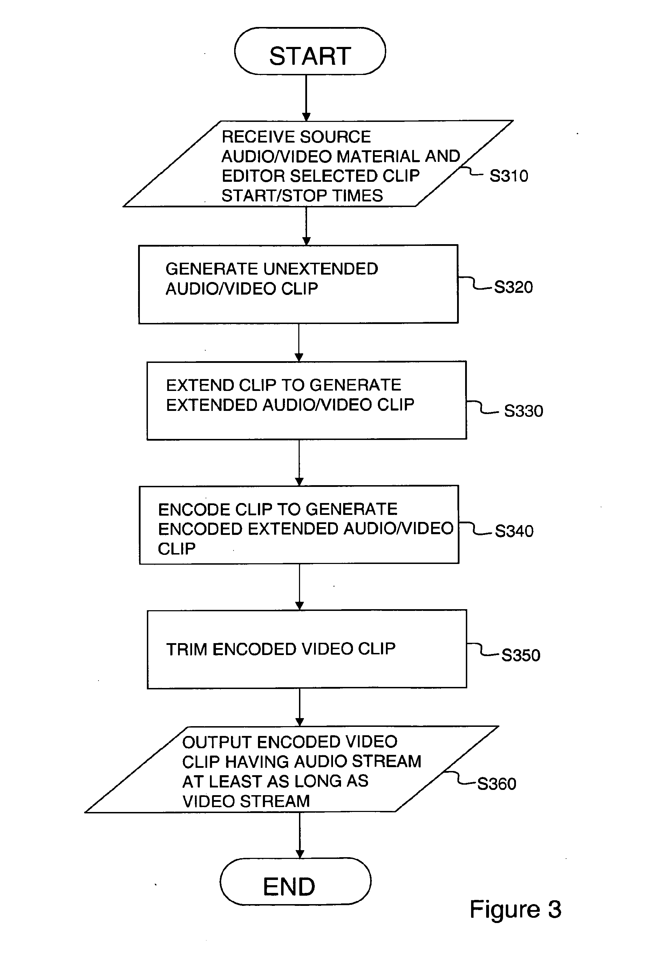

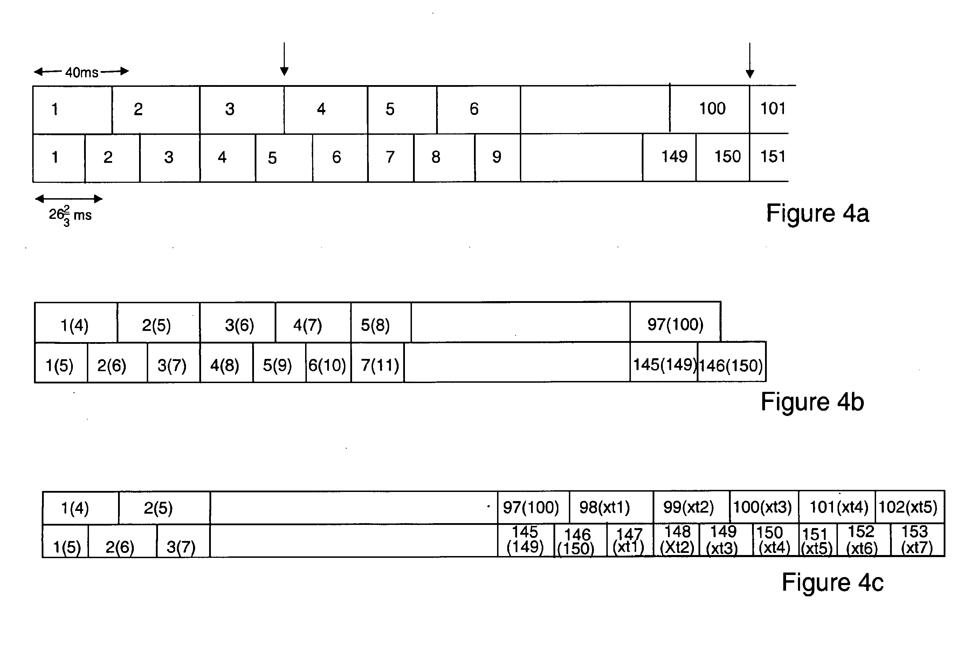

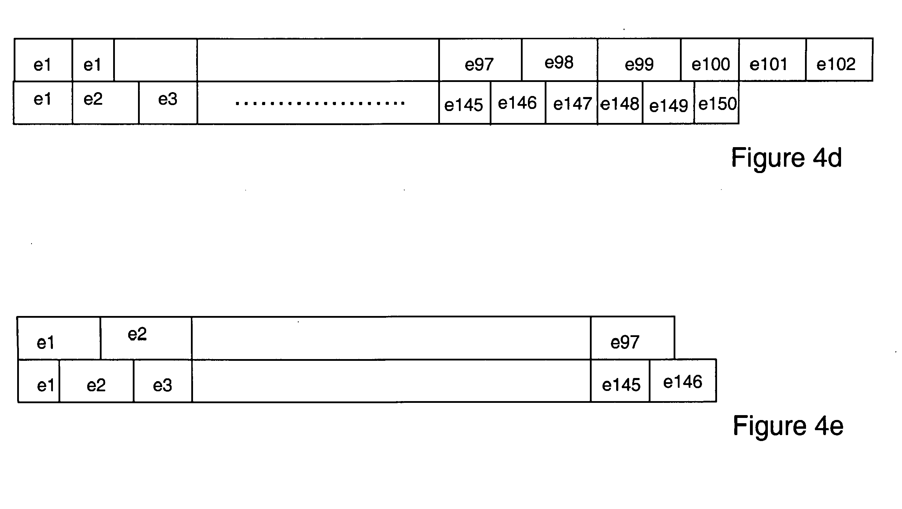

The generator 40 also includes a memory 420 which stores various software modules or code means, namely raw audio/video clip selection code means 422, raw audio/video clip extension code means 424, encoding code means 426 and encoded video trimming code means 428. Each of these modules or code means causes the generator to perform certain functions when executed by the processor 410 and these functions are described in greater detail below, with reference to Figures 3 and 4 below. In brief overview, however, the generator is operable to generate encoded clips in which the duration of the audio stream of the clip is at least as long as the video stream. These encoded clips are then stored in the clip store 10 from where they can be accessed by a clip assembler.

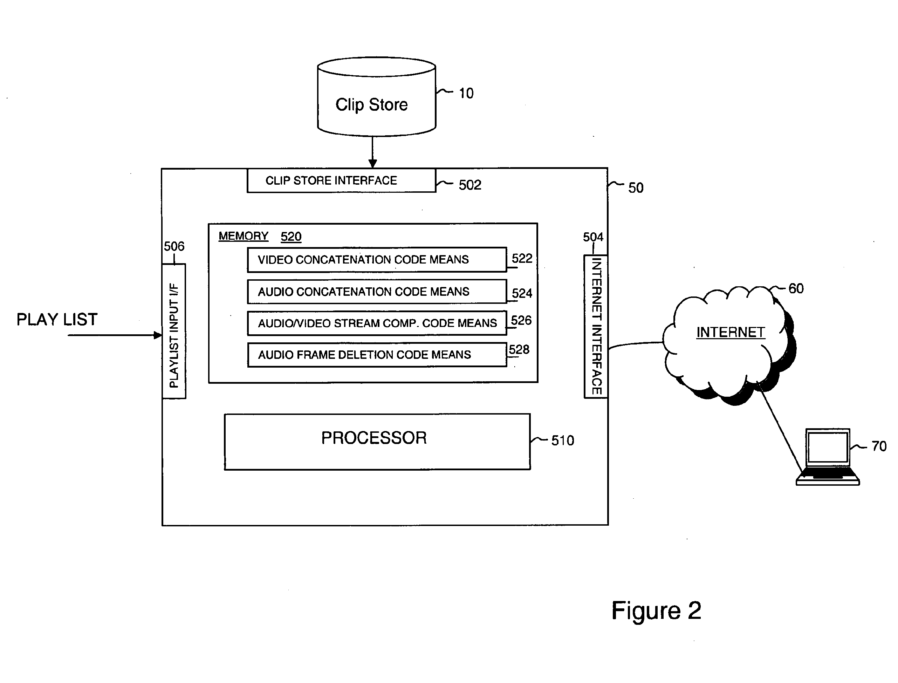

Figure 2 illustrates a clip assembly system including a clip assembler 50. The clip assembly system further comprises the clip store 10 (containing clips generated by the clip generator 40). An end user computer 70 is connected to the clip assembler 50 via the Internet 60 (though of course any data network is suitable for this purpose of connecting the end user computer 70 to the clip assembler 50). In the present embodiment, the clip assembler 50 is implemented using a conventional server computer programmed to provide the functionality described below

The clip assembler 50 comprises a processor 510, a clip store interface 502 for obtaining clips from the clip store 10, a network interface 504 for communicating data over the network 60 (e.g. the internet) and a playlist input interface 506 for receiving playlists. The playlists specify what clips from the clip store 10 the clip assembler needs to assemble, and the order in which they should be assembled. The assembled audio/video article or composition is then output via the network interface 504 to an end user's pc for display to an end user via the network 60.

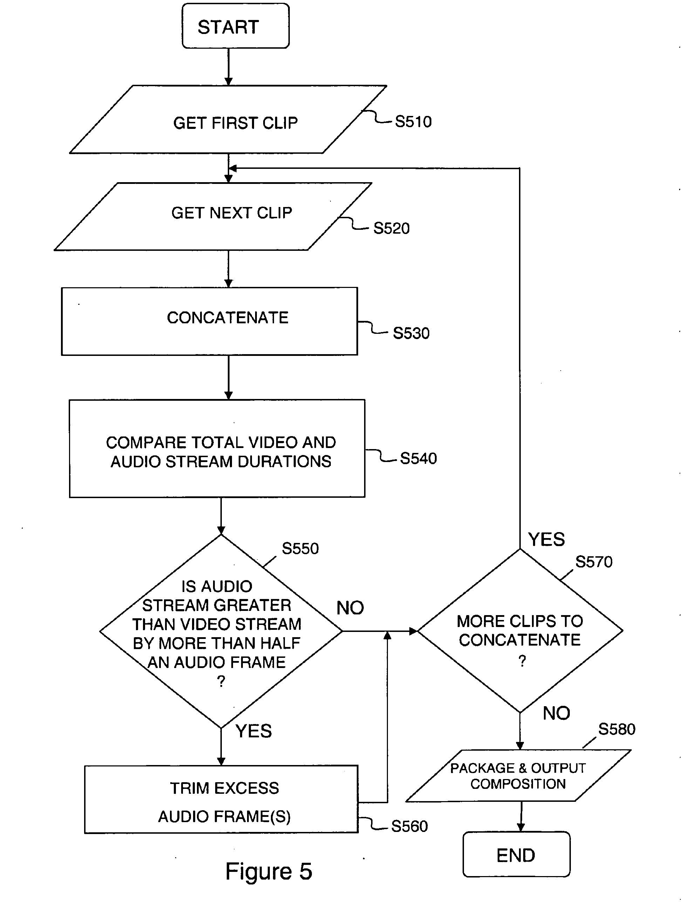

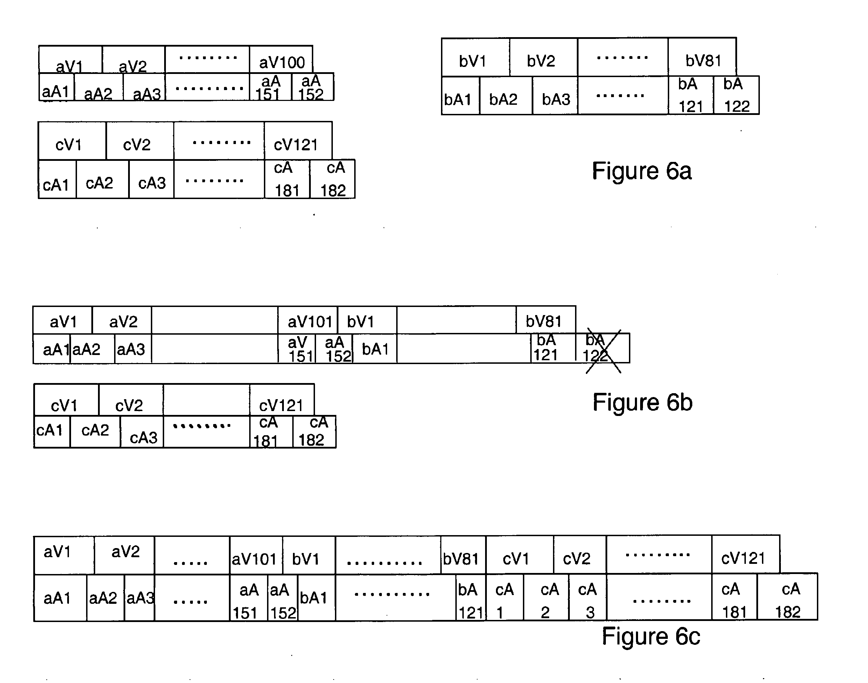

The Clip Assembler 50 also includes a memory 520 which stores various software modules or code means, namely video concatenation means 522, audio concatenation means 524 audio/video stream comparison code means 526 and audio frame deletion code means 528. Each of these modules or code means causes the clip assembler 50 to perform certain functions when executed by the processor 510 and these functions are described in greater detail below, with reference to Figures 5 and 6 below. In brief overview, however, the assembler is operable to generate an audio/video article or composition based on an input playlist by concatenating the various encoded clips stored in the clip store and specified in the playlist, in such a way that the audio stream remains generally in synchronisation with the video stream and such that the clips seem to a user to be joined substantially seamlessly; in particular there is minimal skipping of video frames when moving from one clip to another which can give a user impression of jerkiness within the video.

### Clip Generation

Referring now to Figures 1, 3 and 4a-4e, the steps performed by the clip generator 40 of Figure 1 in order to generate an encoded clip suitable for forming into a composition formed from a plurality of encoded clips are now described. Thus, upon commencement of the method, at step S310 the generator under the control of a human editor operating the user interface 20 obtains, from the media source 30 (which will typically be a hard disk drive but may be any form of data storage device) some source audio/video material in a raw format, from which the editor wishes to select a portion to form the clip to be generated, together with instructions from the editor specifying a start and finish position within the source material for the clip.

At step S320, the clip generator, under control of the raw audio/video selection code means 422, then forms an unextended, raw audio/video clip by extracting the video and audio frames from the source material which lie in between the clip start and end points selected by the editor. This is illustrated in Figures 4a and 4b where the arrows indicate that the editor has selected video frame 4 of the original source audio video data as the start position of the clip and video frame 100 as the final video frame of the clip.

Note that in Figures 4a - 4e, the video frame rate at which the video frames are intended to be displayed is 25 frames per second - this means that the period of time represented by each video frame is 40 milli-seconds (ms) - while each audio frame contains the audio data corresponding to 26 ²/₃ ms. In all of the figures illustrating audio/video data (i.e. Figures 4a-4e and 6a to 6c), the audio frames are shown in the lower of the two rows representing the data, whilst the video frames are shown in the top layer. In practice, in order to transmit or process the data, the data representing audio and video frames are interleaved in some manner (e.g. in Figure 4a video frame 1 might be followed by audio frames 1 and 2, then video frame 2 then audio frame 3, then video frame 4, etc. in order to actually transmit or process the data).

Since the start position in the video clip does not correspond to the start of an audio frame in the original source data (in Figure 4a it corresponds to half-way through audio frame 5) some scheme is required to decide how to select the first audio frame of the unextended, raw audio/video clip; in the present embodiment, the whole of the audio frame is taken (i.e. the whole of audio frame 5 of the original data - resulting in all of the audio frames shifting to the right by half a frame relative to their position compared to the video frames in the original source data - i.e. in Figure 4a). Thus at step 320, in the example illustrated in Figures 4a-4e, video frames 1-100 and audio frames 5-150 are selected to form new video frames 1-97 and new audio frames 1-146 as shown in Figure 4b (the original frame numbers are shown in parentheses in Figure 4b).

Having selected the required video and audio frames to form the unextended raw audio/video clip shown in Figure 4b, the clip generator 40, under control of the raw video clip extension code means 414, at step S330, then extends the clip by adding extra video and audio frames. In the present example an additional 5 video frames are added (note however that for many audio/video encoders it is desirable to add more video frames than this, often 10 additional video frames should be added for optimum performance). A corresponding number of audio frames are also added to extend the audio stream to (approximately) equal (in duration) the stream duration of the (extended) video stream. In the present embodiment, the extension video frames (illustrated in Figure 4c as frames 98(xt1)-102(xt5)) are simply copies of the final frame of the unextended clip - i.e. they are copies of frame 97(100) (of both Figures 4b and 4c). The extension audio frames (frames 147(xt1) - 153(xt7) in Figure 4c) in the present embodiment are simply a period of silence (each lasting, in the present embodiment, for a duration of 26 ²/₃ ms).

Upon completion of step S330, the clip generator 40, under control of the encoding code means 426, at step S340, encodes the raw (uncompressed) extended audio/video clip to generate an encoded (compressed) audio/video clip (having encoded video frames e1 to e102 and encoded audio frames e1 to e150). In the present embodiment, the encoding code means is basically a conventional "video codec" (the term codec is a derivation of the term encoder/decoder) such as the well known video codec's "VirtualDub" (see their web site at http://www.virtualdub.org/) "Sorenson Squeeze" (which is a product made and sold by Sorenson Media Inc.) or FFMPEG (see the web site describing this product at http://ffmpeg.mplayerhq.hu/). All of these video codec's have the property that a few audio frames at the end of a clip of raw audio/video material being encoded tend to be lost as part of the conversion; this loss explains why, in Figure 4d, there are 102 encoded video frames (e1 - e102) whereas there are only 150 encoded audio frames (e1 to e150) - i.e. audio frames 151 (xt5), 152(xt6) and 153(xt7) which were the 5^{tn} 6^{tn} and 7^{tn} extension frames added during the clip extension step S330 have been lost in the encoding process.

It should also be noted that the encoding process will generally use various well-known video compression techniques such as generating difference frames which specify only the differences between the frame being encoded and a reference frame, such that the encoded frame can be reconstructed from the reference frame and the difference information etc. Clearly, with such encoding it is important that the reference frame should be present in order for any difference frames to be correctly decoded by the receiver. This is ensured in the present embodiment, by encoding each clip separately after extracting the desired video frames for the clip from the original source material before performing any compression encoding.

Upon completion of step S340, the clip generator 40, under the control of the encoded video trimming code means 428 at step S350, trims the encoded audio/video clip to remove the extra video frames (i.e. video frames e98-e102 of Figure 4d - corresponding to video frames 98(xt1)-102(xt5) - are removed to leave encoded video frames e1-e97 (as shown in figure 4e). A corresponding number of audio frames are also removed (i.e. trimmed) in such a way as to leave the audio stream duration either equal to or greater than the total duration of the video stream (but not by more than a single audio frame). Thus, in the example shown in Figure 4e, audio frames e147-e150 of Figure 4d (corresponding to audio frames 147(xt1)-150(xt4) in Figure 4c - i.e. the extension (silence) audio frames) have been removed (i.e. trimmed) so as to leave encoded audio frames e1-e146 in the final encoded clip. Note that this gives rise to a total audio stream duration for the clip of 146 x 26 ²/₃ ms = 3893 ⅓ ms compared to a total video stream duration of 97 x 40ms = 3880ms - i.e. the audio stream exceeds the video stream by 13 ⅓ ms or one half of an audio frame duration.

Finally, at step S360, the clip generator outputs the finalised encoded audio/video clip to the audio/video clip store 10 for subsequent possible assembly into an audio video composition or article. In the present embodiment the clips are not simply comprised of the data representing the actual audio and video frames, but also include data defining the container for the audio and video data. In the present embodiment, the container used is the Flash Video (FLV) container format which, in the present embodiment, is used for the encoded audio/video clips (the raw audio video clips are contained within an AVI container format). In the present embodiment the particular encoding used to encode and compress the video files is the H.264 encoding standard (also known as MPEG-4 part 10 and the audio is encoded (and compressed) using AAC (also known as MPEG-4 part 3 or MP3). Having output the encoded audio/video clip to the clip store 10, the method ends.

### Clip Assembly / Composition Generation

Referring now to Figures 2, 5 and 6a-6c, the steps performed by the clip assembler 50 of Figure 2 in order to generate an encoded audio/video composition or article comprised of a plurality of distinct clips is now described.

Thus, upon commencement of the method, at step S510 the assembler 50, under control of a playlist received via the playlist input interface 506 (which is most likely to come from another software module, for example one which builds or selects a playlist based on intuitive controls manipulated by an end user wishing to view a video composition), obtains the first clip to be assembled into the ultimate audio/video composition from the Clip Store 10. The method then proceeds to step S520 in which the next clip (i.e. on the first iteration of this step it is the second clip) to be added to the composition (according to the playlist) is obtained from the Clip Store 10.

Upon completion of step S520, the method proceeds to step S530 in which the Clip Assembler 50 concatenates the audio frames of the clip obtained in step S520 to the existing audio frames of the composition (which is just the first clip on the first iteration of this step). Similarly the video frames of the clip obtained in step S520 are concatenated to the existing video frames of the composition. On the first iteration, this concatenation results in an extended clip such as that shown in Figure 6b where the top two clips of Figure 6a (clips a and b having video frames aV1-aV10 and bV1-bV81 respectively, and having audio frames aA1-aA152 and bA1-bA122 respectively) are concatenated to produce a composition having video frames aV1-bV81 and audio frames aA1-bA122. Note that since the audio stream duration is ½ an audio frame longer than the video stream in all of the clips of Figure 6a, by the time the first two of these clips have been concatenated, the combined audio stream (i.e. the duration of frames aA1-bA122 is 1 audio frame longer than the combined video stream (aV1-bV81).

Note that in the present embodiment, the video clips being concatenated are in the Flash Video format and the output (intermediate) composition of each concatenation is also in the Flash Video format. In this format, each frame (both audio and video) is associated with a timestamp specifying the time at which the frame should be played by the media player (ultimately responsible for playing the file). (Note that interestingly actual media players often simply play audio frames in the order in which they appear deliberately disregarding any gaps suggested by non-contiguous timestamps in the audio frames to avoid unpleasant sounds resulting from such gaps - in such cases, the audio timestamps are used to determine which video frames to play - i.e. whatever the timestamp says for a currently playing audio frame determines the corresponding video frame to be displayed at that same time). Naturally, these timestamps need to be updated as the clips are concatenated such that timestamps become contiguous rather than returning back to zero at the start of each clip within the concatenation/composition.

Upon completion of step S530, at step S540 the video assembler compares the total video and audio stream durations; if at step S550 it determines that the total audio stream duration is more than half of an audio frame longer in duration than the total video stream duration (as is the case for the composition shown in Figure 6b), then at step S560 the excess audio frame (or frames) is (are) deleted from the composition (illustrated by the X through the excess audio frame bA122 in figure 6b).

Upon completion of step S560 (or upon completion of step S550 if it is determined there that the audio stream is not greater than the video stream by more than half an audio frame) the method proceeds to step S570 where it is determined if there are more clips to add to the composition, if so, the method iterates back to step S520 where the next clip is obtained and then steps S520 - S570 are repeated until there are no remaining clips to add to the composition at which point the method proceeds from step S570 to step S580.

Figure 6c illustrates the final composition after iterating through steps S520 to S570 for a second time and adding clip c (containing audio frames cA1-cA182 and video frames cV1-cV121) to the composition. Note on the second iteration since the composited total audio stream is not greater than half an audio frame longer than the composited video stream (it is exactly ½ an audio frame longer) a negative determination is made at step S550 and the method proceeds straight through to step S570 without performing any trimming at step S560, and then at step S570 a negative determination is again made since there are no further clips to be included in the composition and the method therefore proceeds to step S580.

At step S580, the clip assembler 50 performs any final processing required to convert the format to the preferred final form of the video clip and to make the overhead data of the composition file (e.g. any frame index information or time-stamp information contained in the file, etc.) consistent with the actual frames contained within the composition is performed. In the present embodiment, the encoded compressed audio and video frames are re-packaged into an FLV format with correct indexing and time-stamp data. This step is performed automatically by many video editing software applications (e.g. the VideoDub application referred to above) and can be performed very quickly in real-time because no data encoding or compression is involved.

### Variations

In the present embodiment, the clip assembler only assembles clips pre-prepared using the clip generator 40 of Figure 1 and therefore always operates on clips for which the audio stream is no shorter than the video stream and is never longer than the video stream by one whole audio frame or more. However, in alternative embodiments, the clips could be generated using some other mechanism such that the audio and video streams could have different relationships to one another. In such a case, the clip assembler is preferably operable to compare the audio and video streams of the composition (including the first clip in the composition before any concatenation is performed) and perform trimming of either any excess video frames or any excess audio frames, as appropriate, or alternatively perform extending of either the audio or video stream by adding extra (pre-encoded) audio and or video frames in order to ensure that the audio and video streams are approximately equal, and preferably within one audio frame duration of one another. Where frames are being added to extend either the audio or video stream of a composition or clip, it is preferred if the video stream is extended by adding video frames which are identical to the final video frame of the clip or composition (except for overhead data such as the timestamp of the frame, etc.) whereas in the case of audio, it is preferred if the encoded audio frames being added are silent audio frames (again with appropriate overhead data such as timestamps, etc.).

## Claims

1. A method of generating a digitally encoded audio video clip comprising the steps of:
providing a set of raw audio video data comprising a series of complete video frames and a corresponding series of audio frames and receiving a signal indicative of a clip start time and a clip end time;
selecting the video frames and audio frames according to the received clip start and end times to provide an unextended raw video clip;
extending the unextended raw video clip by adding additional video frames and additional audio frames;
encoding the extended raw video clip to form an encoded extended video clip; and
removing excess encoded video and audio frames from the encoded extended video clip such that all of the desired video frames are included and such that the duration of the encoded audio stream does not differ from the duration of the encoded video stream by more than a pre-specified amount.

2. A method according to claim 1 further comprising assembling an audio/video article from a plurality of the digitally encoded audio/video clips generated according to claim 1, the assembling being performed by
determining the identity and order of the clips to be assembled from a playlist,
concatenating the encoded video frames of each subsequent clip onto the encoded video frames of the preceding clip and concatenating the encoded audio frames of each subsequent clip onto the encoded audio frames of the preceding clip, wherein
each time an audio/video clip is concatenated to form a composition comprising two or more digitally encoded video clips, the duration of the audio stream of the clip and/or the composition is compared with the duration of the corresponding video stream and if it is determined that the audio and video stream durations differ by more than a pre-specified amount, then one or more excess audio or video frames are deleted or one or more extra audio or video frames are added so that the audio stream equals the video stream or differs from it by less than the pre-specified amount.

3. A method according to claim 2 wherein the step of removing excess encoded video and audio frames from the encoded extended video clip is performed such that the audio stream duration either equals the video stream duration or exceeds it by less than one audio frame, and wherein the step of deleting or adding audio or video frames prior to or after performing concatenation of a video clip to a video composition, comprises deleting an excess audio frame in the event that the audio stream of the composition exceeds the video stream by more than a pre-specified amount and this step is carried out on each occasion a concatenation step is performed after the concatenation has been performed.

4. A method according to claim 3 wherein the pre-specified amount by which the audio duration must exceed the video stream for an excess audio frame to be deleted is half the duration of an audio frame.

5. An encoded clip generator comprising an input interface for receiving source raw audio/video data comprising a series of complete video frames and a corresponding series of audio frames and for receiving a clip start position and a clip end position; a selection module for generating a raw audio/video clip comprising video frames and audio frames selected from the source data according to the received clip start and end positions to provide an unextended raw audio/video clip; an extension module for extending the unextended raw video clip by adding additional video frames and additional audio frames; an encoding module for encoding the extended raw video clip to form an encoded extended video clip; and a trimming module for removing excess video and audio frames from the encoded extended video clip such that all of the desired video frames are included and such that the duration of the encoded audio stream either equals the duration of the encoded video stream or exceeds it by no more than one audio frame.

6. An encoded clip generator according to claim 5 further comprising an encoded audio/video clip assembler for assembling an audio/video composition or article from a plurality of digitally encoded audio/video clips, wherein each clip comprises a plurality of video and audio frames and wherein the duration of the encoded audio stream is at least as long as the duration of the encoded video stream, the assembler comprising a concatenator for concatenating the encoded video frames of each subsequent clip onto the frames of the preceding clip and concatenating the encoded audio frames of each subsequent clip onto the audio frames of the preceding clip, **characterised in that** the concatenator is operable, each time an audio/video clip is concatenated to form a composition comprising two or more digitally encoded video clips, to compare the duration of the audio stream of the composition with the duration of the video stream of the composition and if it determines that the audio stream exceeds the video stream duration by a pre-specified amount, then the concatenator is further operable to delete the final audio frame so that the audio stream equals the video stream or exceeds it by less than the pre-specified amount.

7. An encoded clip generator according to claim 6 wherein the pre-specified amount is half of the duration of an audio frame.

8. A computer program or programs for carrying out the method of any one of claims 1 to 4 when executed by a programmable computer or computers.

9. Carrier means carrying the computer program or programs of claim 8.
